# EUROPEAN PATENT SPECIFICATION

(11) **EP 0 822 350 B1**
(45) Date of publication and mention of the grant of the patent: **24.10.2001**
(21) Application number: 97110506.9
(22) Date of filing: 26.06.1997
(51) Int. Cl.: F16D 25/12, F16D 25/0638

(54) **Lubricating structure for wet-type clutch**
Schmierung für eine Nasskupplung
Structure de lubrification d'un embrayage humide

(30) Priority: 27.06.1996 JP 16752896
(43) Date of publication of application: 04.02.1998
(73) Proprietor: TOYOTA JIDOSHA KABUSHIKI KAISHA, Aichi (JP)
(72) Inventor: Murata, Kiyohito, Toyota-shi, Aichi (JP)
(74) Representative: Pellmann, Hans-Bernd, Dipl.-Ing.

(56) References cited:
- EP-A- 0 519 387
- DE-A- 3 605 004
- DE-C- 691 668

## Description

### BACKGROUND OF THE INVENTION

### 1. Field of the Invention

This invention relates to a lubricating structure for a wet-type clutch.

### 2. Description of the Related Art

A clutch for selectively bringing a frictional engagement element fitted to an inner diameter side of an outer diameter side member into frictional engagement with a frictional engagement element fitted to an outer diameter side of an inner diameter side member is known in order to selectively engage the outer diameter side member and the inner diameter side member spaced apart from each other in a radial direction and rotating relative to each other. A wet-type clutch, which for supplies a lubricant to the friction surface of each frictional engagement element and wets the friction surface, has been widely used.

In order to secure durability and stability of transmitted torque in such a wet-type clutch, it is important to efficiently cool the friction surface of the frictional engagement elements and to maintain an oil film on the friction surface.

Therefore, various lubrication methods of the wet type clutch have been proposed in the past. For example, document JP-A-4-258528 discloses the construction wherein a plurality of lubricant feed holes are formed in an inner diameter side member, a plurality of lubricant discharge holes are formed in an outer diameter side member and the lubricant is supplied to frictional engagement elements from the inner diameter side of the inner diameter side member through the lubricant feed holes and discharged from the lubricant discharge holes. According to another construction, a lubricant reservoir is formed on the inner diameter side of an outer diameter side member in such a manner as to dip frictional engagement elements into the lubricant, a plurality of lubricant feed holes are disposed in an inner diameter side member and the lubricant is supplied from the inner diameter side of the inner diameter side member to the frictional engagement elements inside the lubricant reservoir through the lubricant feed holes.

According to the former construction described above, however, heat is not sufficiently transmitted to the lubricant because the lubricant moves at a high velocity due to the centrifugal force, so that nonuniformity occurs in the flow of the lubricant and the lubricant becomes locally insufficient. According to the latter, on the other hand, movement of the lubricant inside the lubricant reservoir is not sufficient and heat stays in the lubricant.

According to the prior art described above, therefore, there remain the problems that the clutch cannot be cooled sufficiently by the lubricant and its durability is deteriorated. When large quantities of the lubricant are caused to flow so as to improve cooling performance, a pump load increases, and power for sending the lubricant increases, thereby inviting an increase in fuel cost. A lubricating structure comprising the features of the pre-characterizing clause of claim 1 is known from document DE-C-691 668. In this known lubricating structure, the lubricant is discharged from the lubricant reservoir by means of the discharge opening portion and is cooled before it is introduced into the lubricant feed oil passage by means of the lubricant introduction means. Thereby, the known lubricating structure is capable of cooling the friction surfaces of the frictional engagement elements.

### SUMMARY OF THE INVENTION

It is an object of the present invention to further improve the lubricating structure comprising the features summarized in the pre-characterizing clause of claim 1.

This object is achieved by the lubricating structure according to claim 1.

According to the invention, the lubricating structure comprises a lubricant bypass means which is provided to the oil reservoir and which opens at the time of disengagement of the frictional engagement elements, and discharges the lubricant while bypassing the lubricant reservoir. As a result, the dragging torque of the wet-type clutch at the time of disengagement becomes smaller and the power loss decreases.

The present invention may be more fully understood from the description of preferred embodiments thereof set forth below, together with the accompanying drawings.

### BRIEF DESCRIPTION OF THE DRAWINGS

In the drawings:
Fig. 1 is an explanatory view showing the operation state at the time of engagement of a first embodiment of the invention;
Fig. 2 is a sectional view when a clutch disc is viewed from an axial direction;
Fig. 3 is an explanatory view showing the operation state at the time of disengagement in the first embodiment;
Fig. 4 is an explanatory view showing the operation state at the time of engagement in a second embodiment;
Fig. 5 is an explanatory view showing the operation state at the time of disengagement in the second embodiment;
Fig. 6 is a sectional view taken along a line XIII-XIII of Fig. 5; and
Fig. 7 is a sectional view taken along line IX-IX of Fig. 4.

### DESCRIPTION OF THE PREFERRED EMBODIMENTS

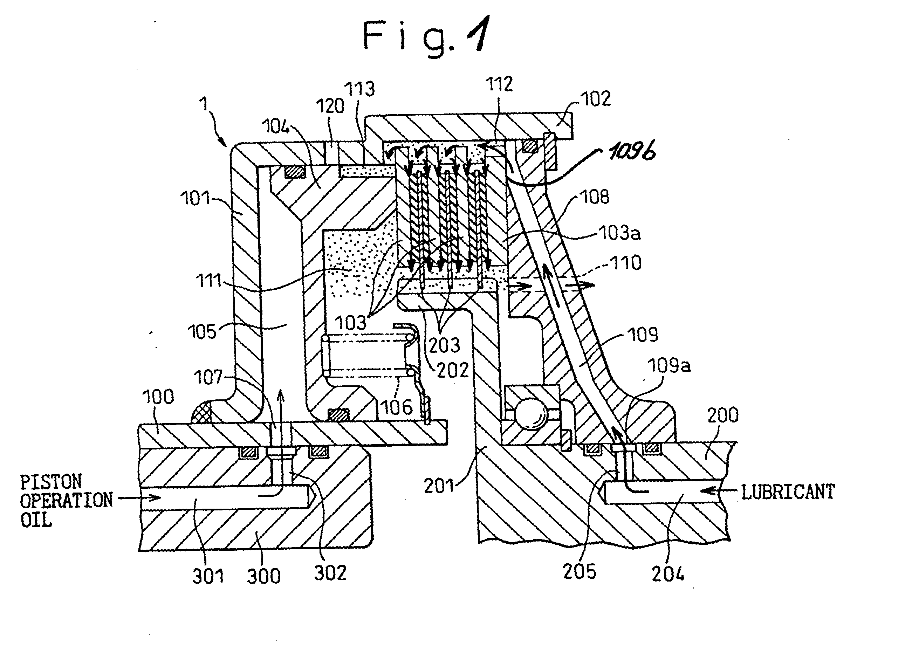

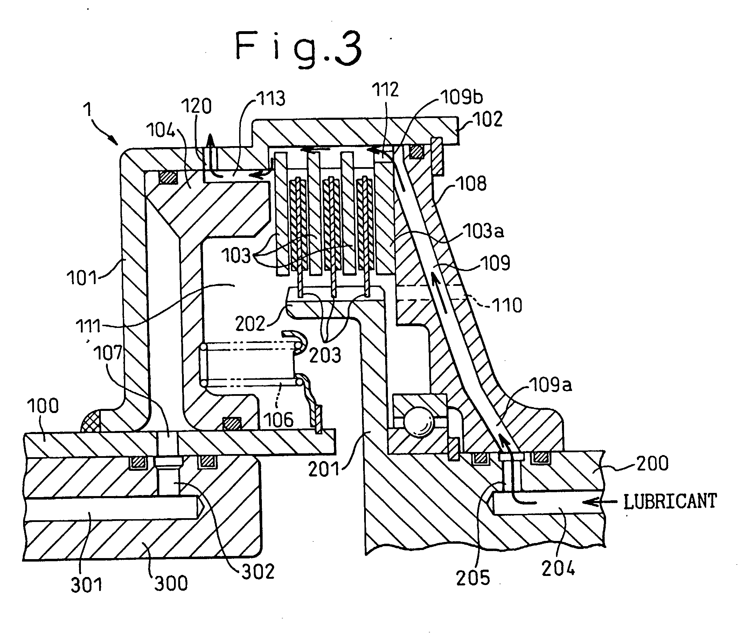

Figs. 1 to 3 show the construction of the first embodiment of the present invention. Fig. 1 shows an input shaft 100 which normally rotates, and a wet type multiple disc clutch 1 which selectively engages this input shaft 100 with an output shaft 200.

A first outer shell support disc 101 is fitted to the input shaft 100 by welding, and a cylindrical outer shell 102 extending from the outer diameter portion of the first outer shell support disc 101 in an axial direction is formed integrally with this first outer shell support disc 101.

On the other hand, an inner shell support disc 201 is formed integrally with the output shaft 200, and a cylindrical inner shell 202 extending from the outer diameter portion of the inner shell support disc 201 in the axial direction is formed integrally with the inner shell support disc 201.

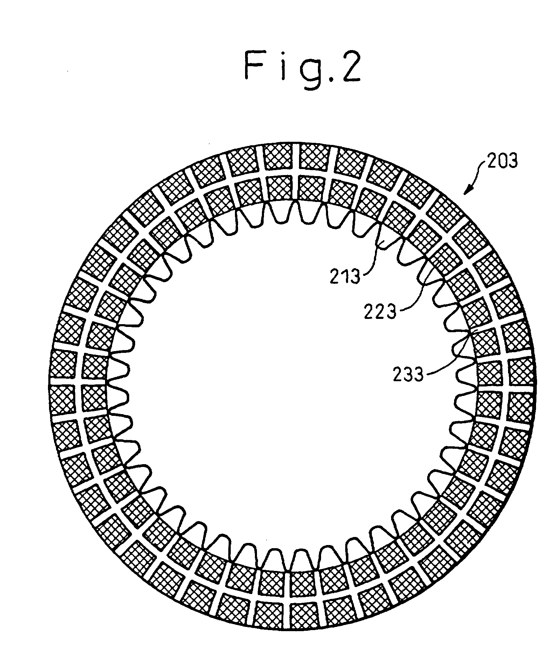

Separator plates 103 and 103a are spline-coupled with the inner diameter side of the outer shell 102, and a clutch discs 203 are spline-coupled with the outer diameter side of the inner shell 202. As shown in Fig. 2 which is a view as viewed from the axial direction, a friction material 223 made of a paper-type material, for example, is bonded to each surface of a metallic base plate 213 spline-coupled with the inner shell 202, and oil grooves 233 are defined on the outer surface of the friction material 223.

Reference numeral 104 denotes a piston. When a piston operation oil is supplied to a piston oil chamber 105, the piston 104 moves to the right in the drawing against the force of a return spring 106, and engages the clutch discs 203 with the separator plates 103 and 103a.

Incidentally, the piston operation oil is supplied through oil holes 301 and 302 bored in an input shaft support member 300 which does not rotate, and through an oil hole 107 bored in the input shaft 100.

On the other hand, a second outer shell support disc 108 is fixedly coupled with the right end portion of the outer shell 102 in the drawing in such a manner as to integrally rotate with the outer shell 102, and the inner diameter side end face of this second outer shell support disc 108 comes into sliding contact with the outer peripheral surface of the output disc 200. A lubricant feed oil passage 109 extending in a radial direction is formed inside the second outer shell support disc 108. The lubricant feed oil passage 109 extends between an inlet opening 109a formed on the inner diameter side end face which comes into sliding contact with the outer peripheral surface of the output shaft 200 and an output opening 109b so formed as to open towards the side surface coming into contact with the inner surface of the outer shell 102 and the separator plate 103a, that is, the portion on the more outer diameter side than the end portion of the friction material 223 of the clutch disc 203. Reference numeral 110 represented by a dashed line denotes a lubricant discharge oil passage for discharging the lubricant after lubricating the surface of the friction material 223, and its position in the radial direction is more inwards than the end portion of the friction material 223 of the clutch disc 203 on the inner diameter side.

An oil passage 204 for introducing the lubricant from a pump, not shown, and an oil hole 205 for communicating the oil passage 204 with a lubricant feed oil passage 109 formed inside the second outer shell support disc 108, are formed in the output shaft 200.

A lubricant reservoir 111 is partitioned and defined by the outer shell 102, the separator plate 103a, the piston 104 and the second outer shell support disc 108 on the inner diameter side of the outer shell 102 so that the engagement portions between the separator plates 103 and 103a and the clutch disc 203 are dipped into the lubricant.

Next, the flow of the lubricant in the first embodiment having the construction described above will be explained with reference to Fig. 1.

First, the piston operation oil is introduced into the piston oil chamber 105 as represented by a thin arrow in Fig. 1, and the separator plates 103 and 103a are shown brought into the frictional engagement with the clutch discs 203.

In Fig. 1, a thick arrow represents the flow of the lubricant. The lubricant flows from the oil hole 204 into the inner diameter side portion of the lubricant feed oil passage 109 through the oil hole 205 and the inlet opening 109a. Here, the second outer shell support disc 108 is coupled with the input shaft 100 through the outer shell 102 and the first outer shell support disc 101, and rotates normally. Therefore, the lubricant flowing into the inner diameter side portion of the lubricant feed oil passage 109 is sent out towards the outer diameter side by the centrifugal force in addition to the lubricant pressure, passes through an oil passage 112 formed by cutting off the outer diameter side end portion of the separator plates 103a from the outlet opening 109b, and is pressure-fed into the lubricant reservoir 111.

The lubricant so introduced into the lubricant reservoir 111 gradually moves from the outer diameter side to the inner diameter side inside the lubricant reservoir 111, lubricates the surface of the friction material 223 of the clutch disc 203, flows through the oil grooves 233 and is discharged from the opening of the lubricant reservoir 111 through the lubricant discharge oil passage 110.

As described above, the lubricant reliably moves inside the lubricant reservoir 111 from the engagement portions between the separator plates 103 and 103a and the clutch discs 203 from the outer peripheral side towards the opening of the lubricant reservoir 111. Therefore, the lubricant can always be supplied sufficiently to the engagement portions between the separator plates 103, 103a and the clutch discs 203 and the heat generated at these engagement portions can be reliably removed, and the engagement portions can be cooled satisfactorily.

By the way, the lubricant inside the lubricant reservoir 111 is represented by the embossed portion.

The first embodiment has the following construction in addition to the construction already described. The outer shell 102 is provided with a lubricant discharge port 120 which is closed when the piston operation oil is supplied into the piston oil chamber 105 in association with the movement of the piston 104 in the axial direction, and which is opened when the piston operation oil is not supplied to the piston oil chamber 105 and the piston 104 is moved towards the first outer shell support disc 101, that is, when the separator plates 103 and 103a and the clutch disc 203 are out of the engagement state.

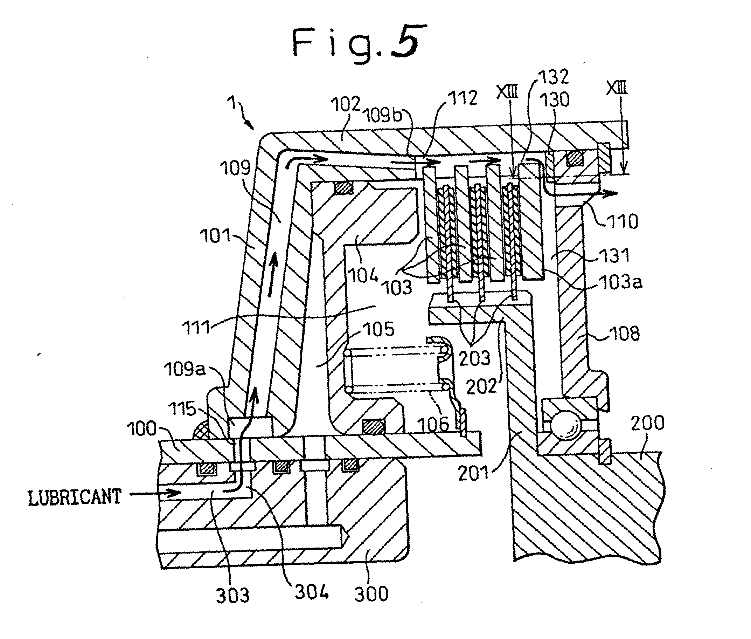

At the time of disengagement, therefore, among the lubricant inside the lubricant reservoir 111 and the lubricant sent out from the lubricant feed oil passage 109 through the oil passage 112, the lubricant flowing out from the lubricant discharge port 120 has a smaller resistance than the lubricant flowing out from the lubricant discharge oil passage 110 through the gaps between the separator plates 103 and 103a and the clutch disc 203, and it is therefore discharged from the lubricant discharge port 120 (refer to the arrow in Fig. 5). As a result, the dragging torque of the clutch 1 at the time of disengagement becomes smaller, the power loss decreases, and the fuel cost can be reduced.

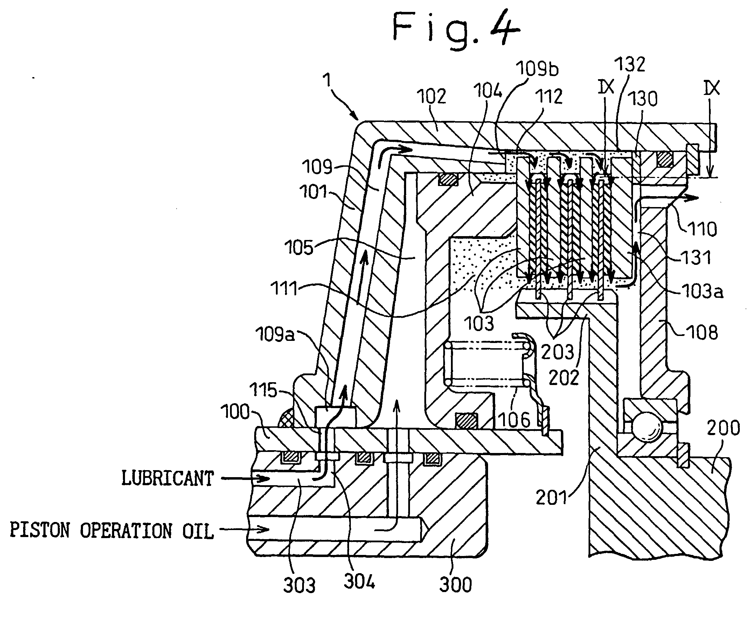

At the time of engagement, on the other hand, the piston 104 moves to the right in the drawing and closes the lubricant discharge port 120 as shown in Fig. 1. Figs. 4 and 5 show the construction of the second embodiment. In comparison with the first embodiment, this second embodiment is different in that the first outer shell support disc 101 is made thicker, the lubricant feed oil passage 109 is formed in this disc 101, and only the lubricant discharge oil passage 110 is formed in the second outer shell support disc 108. The flow of the lubricant in the engagement state and the lubricant inside the lubricant reservoir 111 are represented by the arrow and the embossed portion, respectively, in the same way as in Fig. 1.

The lubricant is supplied to the lubricant feed oil passage 109 from the oil passages 303 and 304 formed in the input shaft support member 300 through the oil hole 115 bored in the input shaft 100. Therefore, the oil passages can be concentratedly formed in the input shaft support member 300 which does not rotate, and need not be formed in the output shaft 200. In comparison with the first embodiment, the second embodiment is also different in that it comprises a wave spring 130 which is disposed between the separator plate 103a and the second outer shell support disc 108, and also a lubricant discharge port 132, between the outer shell 102 and the separator plate 103a, which port opens when the separator plates 103 and 103a are out of engagement from the clutch disc 203 and which discharges the lubricant inside the lubricant reservoir 111 and the lubricant sent from the oil passage 112 through the lubricant feed oil passage 109 to the gap 131 defined between the separator plate 103a and the second outer shell support disc 108, as shown in Figs. 4 and 5.

Since the rest of the construction is fundamentally the same as that of the first embodiment, an additional explanation will be omitted.

When the piston operation oil is not supplied to the piston oil chamber 105 and the piston 104 is moved towards the first outer shell support disc 101 by the force of the return spring 106, the second outer shell support disc 108 and the separator plate 103a are separated from each other by the wave spring 130 so that the gap 131 defined between the second outer shell support disc 108 and the separator plate 103a is communicated with the lubricant reservoir 111 through the lubricant discharge port 132. The gap 131 is formed in the second outer shell support disc 108, and communicates with the lubricant discharge oil passage 110 used for the discharge of the lubricant at the time of engagement, too.

By the way, in order to discharge more easily the lubricant, the lubricant discharge oil passage 110 is disposed immediately on the inner diameter side of the wave spring 130.

As a result, at the time of disengagement, the lubricant inside the lubricant reservoir 111 and the lubricant sent out from the lubricant feed oil to passage 109 through the oil passage 112 do not flow to the lubricant discharge oil passage 110 through the gaps between the separator plates 103 and 103a and the clutch discs 203 but flow through the passage described above having a smaller resistance, that is, through the lubricant discharge port 132, and through the gap 131 to the lubricant discharge oil passage 110 (refer to the arrow in Fig. 5).

Therefore, the dragging torque of the clutch at the time of disengagement becomes smaller, the power loss becomes smaller, and the fuel cost can be reduced.

At the time of engagement, on the other hand, the wave spring 130 is flattened, so that the lubricant discharge port 132 is closed as shown in Fig. 7, and the lubricant inside the lubricant reservoir 111 flows from the opening of the lubricant reservoir 111 through the oil grooves 223 of the frictional material 223 of the clutch disc 203 and then through the gap 131 towards the outer diameter side, and is discharged from the lubricant discharge oil passage 110 (refer to the arrow in Fig. 4).

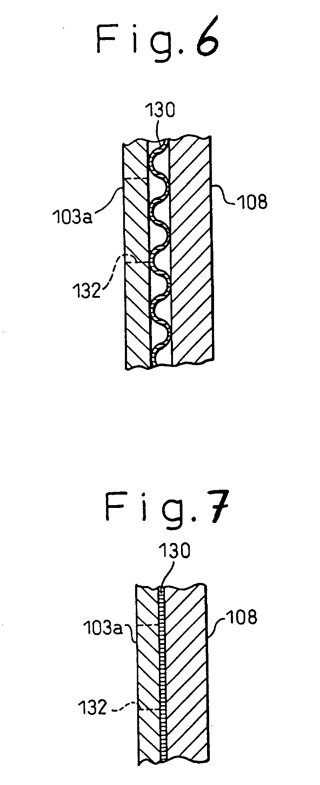

Incidentally, Fig. 6 is a sectional view taken along a line XIII-XIII of Fig. 5 and shows the state of the wave spring 130 at the time of disengagement, and Fig. 7 is a sectional view taken along a line IX-IX of Fig. 4 and shows the state of the wave spring 130 at the time of engagement.

## Claims

1. A lubricating structure for a wet-type clutch (1) including frictional engagement elements (103,103a;203) fitted respectively to an outer diameter side member (102) and to an inner diameter side member (202) disposed in a mutually spaced-apart relation and rotating relative to each other round a common axis, selectively pushed by push means (104) between said outer diameter side member (102) and said inner diameter side member (202), and brought into frictional engagement with each other, said lubrication structure comprising:
a lubricant reservoir (111) formed on the inner diameter side of said outer diameter side member (102) in such a manner as to dip the friction surfaces of said frictional engagement elements (103,103a;203) into the lubricant;
a lubricant feed oil passage (109) connected to said lubricant reservoir (111) radially outwardly of the friction surfaces of said frictional engagement elements (103,103a;203), and rotating together with said outer diameter side member (102);
lubricant introduction means (204,205;303,304) for introducing the lubricant into said lubricant feed oil passage (109); and
a discharge opening portion (110) for discharging the lubricant from said lubricant reservoir (111),
**characterized in that** a lubricant bypass means (120;130) which opens at the time of disengagement of said frictional engagement elements (103,103a;203), and discharges the lubricant while bypassing said frictional engagement elements (103,103a;203), is provided to said lubricant reservoir (111).

2. A lubricating structure for a wet-type clutch according to claim 1, wherein said lubricant bypass means (120) is closed by said push means (104) when said push means (104) moves to a position for bringing said frictional engagement elements (103,103a;203) into frictional contact, and is opened when said push means (104) moves to a position for bringing said frictional engagement elements (103,103a;203) out of frictional contact.

3. A lubricating structure for a wet-type clutch according to claim 1, which further comprises a support plate (108) and a wave spring (130) interposed between said support plate and said frictional engagement elements (103,103a;203), and wherein said wave spring (130) forms a gap between said support plate (108) and that one (103a) of said engagement elements (103,103a;203) which is disposed adjacent to said support plate (108) and an oil passage for guiding the lubricant to said discharge opening portion (110) only when said push means (104) does not push said frictional engagement elements (103,103a;203) to said support plate (108), and performs the function of said lubricant bypass means.

4. A lubricating structure for a wet-type clutch according to claim 1, wherein grooves (233) for guiding the lubricant are formed on the surfaces of said frictional engagement elements (203).

5. A lubricating structure for a wet-type clutch according to claim 1, wherein said discharge opening portion (110) exists substantially at the end portion on the inner diameter side of said frictional engagement elements (103,103a;203) in the radial direction.

6. A lubricating structure for a wet-type clutch according to claim 1, wherein said lubricant introduction means (204,205) is formed inside a center shaft (200) coupled with said inner diameter side member (202).

7. A lubricating structure for a wet-type clutch according to claim 1, wherein said lubricant introduction means (303,304) is formed inside a center shaft (100,300) coupled with said outer diameter side member (102).

## Patentansprüche

1. Schmieranordnung für eine Nasskupplung (1) mit Reibungseingriffselementen (103, 103a; 203), die jeweils an einem äußeren Durchmesserseitenelement (102) und einem inneren Durchmesserseitenelement (202) angepasst sind, die in einer wechselseitig beabstandeten Beziehung angeordnet sind und relativ zueinander um eine gemeinsame Achse rotieren, wahlweise durch Schubeinrichtungen (104) zwischen dem äußeren Durchmesserseitenelement (102) und dem inneren Durchmesserseitenelement (202) geschoben werden und in Reibungseingriff miteinander gebracht werden, wobei die Schmieranordnung folgendes aufweist:
ein Schmiermittelreservoir (111), das an der inneren Durchmesserseite des äußeren Durchmesserseitenelements (102) derart ausgebildet ist, um die Reibflächen der Reibungseingriffselemente (103, 103a; 203) in das Schmiermittel einzutauchen;
einen Schmiermittelförderöldurchgang (109), der mit dem Schmiermittelreservoir (111) radial nach außen von den Reibflächen der Reibungseingriffselemente (103, 103a; 203) verbunden ist und sich gemeinsam mit dem äußeren Durchmesserseitenelement (102) dreht;
Schmiermitteleinführeinrichtungen (204, 205; 303, 304) für ein Einführen des Schmiermittels in den Schmiermittelförderöldurchgang (109); und
einen Ausstoßöffnungsabschnitt (11a) für ein Ausstoßen des Schmiermittels aus dem Schmiermittelreservoir (111),
**dadurch gekennzeichnet, dass**
Schmiermittelumleitungseinrichtungen (120; 130), die sich zu dem Zeitpunkt der Eingriffsaufhebung der Reibungseingriffselemente (103, 103a; 203) öffnen und das Schmiermittel ausstoßen, während es an den Reibungseingriffselementen (103, 103a; 203) vorbeigeleitet wird, an dem Schmiermittelreservoir (111) vorgesehen sind.

2. Schmieranordnung für eine Nasskupplung gemäß Anspruch 1, wobei die Schmiermittelumleitungseinrichtung (120) durch die Schubeinrichtung (104) geschlossen wird, wenn sich die Schubeinrichtung (104) zu einer Position zum Bringen der Reibungseingriffselement (103, 103a; 203) in eine Reibungsberührung bewegt, und geöffnet wird, wenn sich die Schubeinrichtung (104) zu einer Position zum Bringen der Reibungseingriffselemente (103, 103a; 203) aus der Reibungsberührung bewegt.

3. Schmieranordnung für eine Nasskupplung gemäß Anspruch 1, des weiteren mit einer Stützplatte (108) und einer Wellenfeder (130), die zwischen die Stützplatte und die Reibungseingriffselemente (103, 103a; 203) zwischengesetzt sind, und wobei die Wellenfeder (130) einen Spalt zwischen der Stützplatte (108) und desjenigen (103a) der Eingriffselemente (103, 103a; 203) ausbildet, das angrenzend zu der Stützplatte (108) angeordnet ist, und einem Öldurchgang zum Führen des Schmiermittels zu dem Ausstoßöffnungsabschnitt (110) nur dann, wenn die Schubeinrichtung (104) die Reibungseingriffselemente (103, 103a; 203) nicht zu der Stützplatte (108) schiebt und die Funktion der Schmiermittelumleitungseinrichtung ausführt.

4. Schmieranordnung für eine Nasskupplung gemäß Anspruch 1, wobei Vertiefungen (233) zum Führen des Schmiermittels an den Flächen der Reibungseingriffselemente (203) ausgebildet sind.

5. Schmieranordnung für eine Nasskupplung gemäß Anspruch 1, wobei der Ausstoßöffnungsabschnitt (110) im wesentlichen an dem Endabschnitt an der inneren Durchmesserseite der Reibungseingriffselemente (103, 103a; 203) in der radialen Richtung vorhanden ist.

6. Schmieranordnung für eine Nasskupplung gemäß Anspruch 1, wobei die Schmiermitteleinführeinrichtung (204, 205) innerhalb einer Mittenwelle (200) ausgebildet ist, die mit dem äußeren Durchmesserseitenelement (202) gekoppelt ist.

7. Schmieranordnung für eine Nasskupplung gemäß Anspruch 1, wobei die Schmiermitteleinführeinrichtung (303, 304) innerhalb einer Mittenwelle (100, 300) ausgebildet ist, die mit dem äußeren Durchmesserseitenelement (102) gekoppelt ist.

## Revendications

1. Structure de lubrification destinée à un embrayage du type humide (1) comprenant des éléments d'accouplement par friction (103, 103a, 203) montés respectivement sur un élément du côté diamètre extérieur (102) et sur un élément du côté diamètre intérieur (202) disposés pour être écartés l'un de l'autre et tournant l'un par rapport à l'autre autour d'un axe commun, et qui sont poussés de façon sélective par un moyen de poussée (104) entre ledit élément du côté diamètre extérieur (202) et ledit élément du côté intérieur (202), et amenés en accouplement par friction l'un avec l'autre, ladite structure de lubrification comprenant :
un réservoir de lubrifiant (111) formé du côté diamètre intérieur dudit élément du côté diamètre extérieur (102) de manière à plonger les surfaces de friction desdits éléments d'accouplement par friction (103, 103a ; 203) dans le lubrifiant ;
un passage d'huile d'alimentation en lubrifiant (109) raccordé audit réservoir de lubrifiant (11) radialement vers l'extérieur des surfaces de friction desdits éléments d'accouplement par friction (103, 103a ; 203), et tournant en même temps que ledit élément du côté diamètre extérieur (102) ;
un moyen d'introduction de lubrifiant (204, 205 ; 303, 304) destiné à introduire le lubrifiant dans ledit passage d'huile d'alimentation en lubrifiant (109) ; et
une partie d'ouverture de décharge (110) destinée à décharger le lubrifiant dudit réservoir de lubrifiant (111),
**caractérisé en ce qu'**un moyen de contournement du lubrifiant (120 ; 130) qui s'ouvre au moment du désaccouplement desdits éléments d'accouplement par friction (103, 103a, 203) et qui décharge le lubrifiant tout en contournant les éléments d'accouplement par friction (103, 103a ; 203), est prévu sur ledit réservoir (111).

2. Structure de lubrification destinée à un embrayage du type humide selon la revendication 1, dans laquelle ledit moyen de contournement de lubrifiant (120) est fermé par ledit moyen de poussée (104) lorsque ledit moyen de poussée (104) se déplace jusqu'à une position pour amener lesdits éléments d'accouplement par friction (103, 103a ; 203) en contact de friction, et est ouvert lorsque ledit moyen de poussée (104) se déplace jusqu'à une position pour amener lesdits éléments d'accouplement par friction (103, 103a ; 203) pour ne plus être en contact de friction.

3. Structure de lubrification destinée à un embrayage du type humide selon la revendication 1, laquelle comprend en outre une plaque de support (108) et un ressort à lame (130) intercalé entre ladite plaque de support et lesdits éléments d'accouplement par friction (103, 103a ; 203) et dans lequel ledit ressort à lame (130) forme un intervalle entre ladite plaque de support (108) et celui (103a) desdits éléments d'accouplement (103, 103a ; 203) qui est adjacent à ladite plaque de support (108), et un passage d'huile destiné à guider le lubrifiant jusqu'à ladite partie d'ouverture de décharge (110) seulement lorsque ledit moyen de poussée (104) ne pousse pas lesdits éléments d'accouplement par friction (103, 103a ; 203) vers ladite plaque de support (108), et accomplit la fonction dudit moyen de contournement du lubrifiant.

4. Structure de lubrification destinée à un embrayage du type humide selon la revendication 1, dans laquelle les rainures (233) destinées à guider le lubrifiant sont formées sur les surfaces desdits éléments d'accouplement par friction (203).

5. Structure de lubrification destinée à un embrayage du type humide selon la revendication 1, dans laquelle ladite partie d'ouverture de décharge (110) se trouve pratiquement au niveau de la partie d'extrémité du côté diamètre intérieur desdits éléments d'accouplement par friction (103, 103a ; 203), dans la direction radiale.

6. Structure de lubrification destinée à un embrayage du type humide selon la revendication 1, dans laquelle ledit moyen d'introduction de lubrifiant (204, 205) est formé à l'intérieur d'un arbre central (200) accouplé avec ledit élément du côté diamètre intérieur (202).

7. Structure de lubrification destinée à un embrayage du type humide selon la revendication 1, dans laquelle ledit moyen d'introduction de lubrifiant (303, 304) est formé à l'intérieur d'un arbre central (100, 300) accouplé avec ledit élément du côté diamètre extérieur (102).
